# EUROPEAN PATENT APPLICATION

(11) **EP 4 593 344 A1**
(43) Date of publication of application: **30.07.2025**
(21) Application number: 24153480.9
(22) Date of filing: 23.01.2024
(51) Int. Cl.: H04L 41/0866, H04L 41/084, H04L 41/0853, H04L 41/0894

(54) **DETECTING NETWORK MISCONFIGURATION IN PROCESS CONTROL SYSTEMS**

(71) Applicant: ABB SCHWEIZ AG, 5400 Baden (CH)
(72) Inventor: POOK, Stefan, 32423 Minden (DE); SCHNEIDER, Rudy, Westlake, 44145 (US); KEUL, Thomas, 63579 Freigericht (DE); JESKE, Ralf, 32469 Petershagen (DE)
(74) Representative: Maiwald GmbH

(57) **Abstract**

There is provided a method for detecting network misconfiguration in process control systems. The method comprises, by a first network device in a process control system:
receiving a transmission from a second network device via a network, wherein the transmission comprises transmission data representing one or more components using which the transmission was made by the second network device;
determining reception data representing one or more components using which the transmission was received by the first network device;
determining a current network configuration based on the transmission data and the reception data; and
validating the determined current network configuration against an expected network configuration to detect misconfiguration of the network.

## Description

### FIELD OF THE INVENTION

The invention relates to methods and systems for detecting network misconfiguration in process control systems.

### BACKGROUND

The network is an important factor in process control and will become even more important in future. Process control networks typically employ redundancy protocols to reduce the impact of system faults. Depending on the desired availability, different network topologies and redundancy protocols are used within a plant, which are not necessarily compatible. Usually, a controller is aware of its own configuration, but may be unaware of the network configuration used by other devices.

### SUMMARY

It would be advantageous to provide mechanisms for reducing the risk of incompatibilities between network topologies and redundancy protocols leading to problems during maintenance or upgrade of the plant. There is therefore provided, in a first aspect of invention, a method for detecting network misconfiguration in process control systems. The method of the first aspect comprises, by a first network device in a process control system:
receiving a transmission from a second network device via a network, wherein the transmission comprises transmission data representing one or more components using which the transmission was made by the second network device;
determining reception data representing one or more components using which the transmission was received by the first network device;
determining a current network configuration based on the transmission data and the reception data; and
validating the determined current network configuration against an expected network configuration to detect misconfiguration of the network.

The transmission data may comprise at least a unique identifier of the second network device. The unique identifier of the second network device may comprise a serial number and/or a location. The transmission data may further comprise an identifier of a network interface used by the second network device to send the transmission. The network interface may comprise a port such as an ethernet port. The transmission data may further comprise an identifier of the network. The network identifier may comprise a logical network assignment (e.g. "Control Net Line-A", "Field-Net-22", etc.). Optionally, the transmission data may further comprise an indication of which redundancy protocol is used by the second network device.

Determining the reception data may comprise identifying a network interface of the first network device using which the transmission was received.

The method may comprise receiving transmissions from all other network devices connected to, or using, the network, so as to obtain a complete representation of the current network configuration. The method may then comprise validating the determined current network configuration in response to receiving the transmissions from all other network devices.

The transmission may be a multicast sent from the second network device not only to the first network device but also to one or more other network devices connected to the network. The first network device may receive the multicast by subscribing to such multicasts.

The second network device may form part of a second process control system which is separate from the process control system which comprises the first network device.

The expected network configuration may comprise, or may be derivable from, predefined configuration information made available to the first network device (and/or to other network devices) before commencement of the method. For example, such predefined configuration information may be determined using an engineering tool and downloaded to network devices during a commissioning phase. In this way, as soon as the network is configured, each network device knows how its individual network interfaces are to be configured, which redundancy protocols are to be used, and/or how the network is to be used in context of the complete plant.

Validation of the current network configuration against the expected network configuration may comprise one or more sanity checks or checks against predefined or user-defined rules expressing acceptable configurations.

By "misconfiguration" is meant in particular misconnection or miswiring, e.g. erroneous connection of cables to ports.

In response to the detection of misconfiguration of the network, the method may comprise taking one or more remedial actions. In an example, the first network device sends a response to the second network device to inform the latter about the misconfiguration. In another example, the first network device (and/or the second network device) sends an alarm to a human-machine interface (HMI) to inform a user about the misconfiguration. The HMI may be associated with an engineering tool and/or operations desk, for example. The alarm may specify one or more network identifiers, device identifiers, and/or interface identifiers to provide information for assisting on-site engineers to locate and correct the misconfiguration. In a further example, the remedial action comprises disabling one or more ports or pausing a process, such as a commissioning, maintenance, or runtime process. In such cases, the action may be implemented so as to avoid comprising already-running ports in an existing system, for example in the case that the existing system is being expanded to include new hardware. Selection of remedial action may be made according to predefined criteria, which may be user-defined or configurable, and which may depend on the severity of the misconfiguration.

In a second aspect, there is provided a method comprising sending the transmission to the first network device from the second network device.

In a third aspect, there is provided a method comprising:
installing a first network device in a process control system;
connecting the first network device to a network;
receiving a transmission from a second network device via the network, wherein the transmission comprises transmission data representing one or more components using which the transmission was made by the second network device;
determining reception data representing one or more components using which the transmission was received by the first network device;
determining a current network configuration based on the transmission data and the reception data; and
sending the determined current network configuration to an engineering tool for display to an end-user.

The method of the first-third aspects may be combined in any permutation or performed by the same network device.

The methods of the first-third aspects may be carried out during a commissioning phase or upon link-up, when installing a completely new plant, to verify the logical network connections, e.g. whether all network devices that should be reachable via the individual networks are reachable. Additionally or alternatively, the methods may be carried out during runtime, e.g. cyclically or periodically, e.g. at low frequency during normal operation. This may facilitate detection of network misconfiguration resulting from maintenance performed on the network. The methods of the first-third aspects may be carried out during expansion of the plant. In this way, an existing network device is able to report a new, detected device together with information on whether the network is as expected or suspicious.

According to a fourth aspect, there is provided a controller for a process control system, wherein the controller is configured to carry out the method of any one or more of the first-third aspects.

According to a fifth aspect, there is provided a process control system configured to carry out the method of any one or more of the first-third aspects.

According to a sixth aspect, there is provided an industrial automation system comprising the controller of the fourth aspect and/or the process control system of the fifth aspect.

The method of any of the first-third aspects may be computer implemented. Optional features of one aspect may form part of any other aspect, mutatis mutandis.

According to a seventh aspect, there is provided a computing system configured to perform the method of any one or more of the first-third aspects.

According to an eighth aspect, there is provided a computer program (product) comprising instructions which, when executed by a computing system, enable or cause the computing system to perform the method of any of the first-third aspects.

According to a ninth aspect, there is provided a computer-readable (storage) medium comprising instructions which, when executed by a computing system, enable or cause the computing system to perform the method of any of the first-third aspects. The computer-readable medium may be transitory or non-transitory, volatile or non-volatile.

Using the techniques described herein, it becomes possible to decouple network configuration and testing from the application development. In other words, the control application need not be loaded to verify the surrounding network.

The methods and systems described herein facilitate early detection of network configuration and wiring errors (e.g. incorrect wiring, unexpected connections, incompatible network configurations, incompatible protocols) during runtime or maintenance, thereby reducing complexity and managing the risks caused by technicians installing components wrongly.

As used herein, the term "network device" refers to any device comprising a network switch, and in particular to a controller of a process control system.

By "(process) automation system" is meant an industrial plant or production plant comprising one or more pipelines, production lines, and/or assembly lines for transforming one or more educts into a product and/or for assembling one or more components into a final product.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

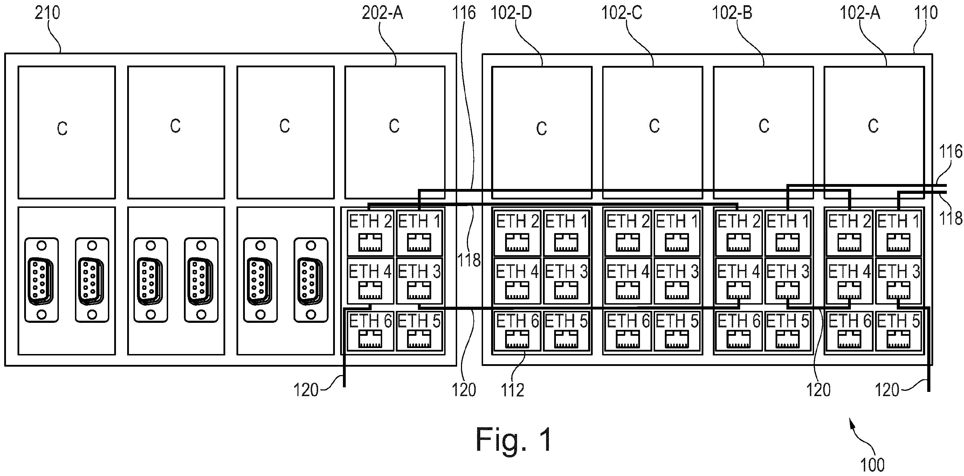

A detailed description will now be given, by way of example only, with reference to the accompanying drawings, in which:-
FIG. 1 illustrates detection of network misconfiguration in process control systems.

### DETAILED DESCRIPTION

FIG. 1 illustrates a first process control system 100 for controlling an industrial process carried out by an automation system (not shown). The process control system 100 comprises a mounting termination unit (MTU) 110, commonly known as a backplane, which physically and communicatively couples multiple controllers 102-A, 102-B, 102-C, 102-D, collectively referred to as controllers 102, to one another. The controllers 102 are configured to communicate with other components of the automation system, such as field devices (not shown), or an engineering tool as described herein. The engineering tool (typically implemented as a software package) is used to create configuration data for the process control system 100, which can be downloaded to the controllers 102. For the purposes of such communication, the controllers 102 are provided with ethernet ports, such as that illustrated at 112, together with associated communications interface circuitry. Each of the controllers 102 furthermore comprises its own network switch. The mounting termination unit 110 may further comprise circuitry (not shown) for powering the controllers 102 and/or for accommodating a power module.

Each of the controllers 102 is configured to control a respective process carried out by the automation system (not shown) by communicating with a set of field devices. The process control system 100 may find application in any field of industry where process automation is desired, such as energy, oil and gas, chemical, petrochemical, and so on. The controllers 102 handle process control and monitoring for the automation system by receiving input signals from sensors and instruments, and outputting control signals for controlling plant equipment such as pumps, valves, conveyors, mixers, and heaters. Any such sensor, instrument or plant equipment may form part of one or more of the field devices. The controllers 102 are configured to execute process control applications to generate the control signals on the basis of the input signals. Each control application may comprise control logic instructing the respective controller how to respond to all input signals with appropriate control signals to maintain normal functioning of the process. In one non-limiting example, the control application conforms to the international standard IEC 61131. Each of the controllers 102 comprises logic circuitry configured to execute the respective control application. The logic circuitry may comprise a CPU, MCU, SoC, FPGA, DSP, and/or an Al-engine, together with any memory to be used in the processing of signals. The logic circuitry may be further configured to perform any one or more of the other operations described herein.

Further illustrated in FIG. 1 is a second MTU 210 comprising a number of controllers including controller 202-A.

In the non-limiting example illustrated in FIG. 1, five controllers (102-A, 102-B, 102-C, 102-D, and 202-A) share three different networks. Specifically, control networks 116 and 118 are provided as a redundant pair using Parallel Redundancy Protocol (PRP). Meanwhile, a fieldbus network 120 is provided using the Media Redundancy Protocol (MRP), which involves a ring topology. The various networks require different wiring schemes. Applying the wiring scheme from the fieldbus network 120 to a control network 116, 118 may result in a network loss.

To assist in identifying such miswiring during commissioning, maintenance, or expansion of the process control system 100, the present disclosure provides a method for detecting network misconfiguration, as described and claimed herein.

As soon as the networks 116-120 have been configured, each controller 102 knows how the individual network interfaces 112 are to be configured, which redundancy protocols are to be used, and how the networks 116-120 are to be used in the context of the plant. Each controller 102 sends a multicast upon link-up and later, periodically, during normal operation. The multicast contains: a unique identifier of the controller (e.g., serial no., location, etc.), an identifier of the network interface used, an identifier of the network (e.g. "Control Net Line-A", "Field-Net-22" etc.), and optionally the redundancy protocol used.

Each controller 102 is also capable of subscribing to these multicasts. Each controller 102 is operable to use the received multicasts from other controllers to validate the network configuration.

In one non-limiting example, validation is performed when receiving a multicast from the newly added controller 202-A, in the case that the existing process control system 100 is being expanded to include the MTU 210. In this example, the multicast erroneously specifies that a particular interface of controller 202-A connects to the network "Fieldbus-22 using MRP", whereas the actual network is "Control Net Line-A using PRP", as determined by the receiving controller(s) 102. Several remedial actions are envisaged by the present disclosure in this scenario:-
- The existing controller 102 can send a response to the new controller 202-A to inform the latter about a possible misconfiguration/misconnection; and/or
- Both the existing controller 102 and the new controller 202-A can send an alarm to the HMI to inform a user about the network misconfiguration/misconnection.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for detecting network misconfiguration in process control systems, the method comprising, by a first network device in a process control system:
receiving a transmission from a second network device via a network, wherein the transmission comprises transmission data representing one or more components using which the transmission was made by the second network device;
determining reception data representing one or more components using which the transmission was received by the first network device;
determining a current network configuration based on the transmission data and the reception data; and
validating the determined current network configuration against an expected network configuration to detect misconfiguration of the network.

2. The method of claim 1, wherein the transmission data comprises at least a unique identifier of the second network device.

3. The method of claim 1 or 2, wherein the transmission data comprises an identifier of a network interface used by the second network device to send the transmission.

4. The method of any preceding claim, wherein the transmission data comprises an identifier of the network.

5. The method of any preceding claim, wherein the transmission data comprises an indication of which redundancy protocol is used by the second network device.

6. The method of any preceding claim, wherein determining the reception data comprises identifying a network interface of the first network device using which the transmission was received.

7. The method of any preceding claim, comprising receiving transmissions from all other network devices connected to, or using, the network, and validating the determined current network configuration in response to receiving the transmissions from all other network devices.

8. The method of any preceding claim, wherein the transmission comprises a multicast.

9. The method of any preceding claim, wherein the expected network configuration comprises, or is derivable from, predefined configuration information made available to the first network device.

10. The method of any preceding claim, wherein validating the current network configuration against the expected network configuration comprises one or more checks against predefined rules expressing acceptable configurations.

11. The method of any preceding claim, comprising, in response to the detection of misconfiguration of the network, taking one or more remedial actions.

12. The method of claim 11, wherein the remedial action comprises sending a response to the second network device and/or to an HMI to inform about the misconfiguration.

13. A method comprising sending the transmission of any preceding claim to the first network device from the second network device.

14. A controller for a process control system, wherein the controller is configured to carry out the method of any preceding claim.

15. A computer-readable medium comprising instructions which, when executed by a computing system, cause the computing system to carry out the method of any of claims 1-13.
